# EUROPÄISCHE PATENTSCHRIFT

(11) **EP 3 095 562 B1**
(45) Veröffentlichungstag und Bekanntmachung des Hinweises auf die Patenterteilung: **11.03.2020**
(21) Anmeldenummer: 16169361.9
(22) Anmeldetag: 12.05.2016
(51) Int. Cl.: B25J 1/02, B67D 9/02, B67D 7/40, B66C 23/00

(54) **HANDHABUNGSVORRICHTUNG**
HANDLING DEVICE
DISPOSITIF DE MANIPULATION

(30) Priorität: 19.05.2015 DE 102015107795
(43) Veröffentlichungstag der Anmeldung: 23.11.2016
(73) Patentinhaber: NMF Techniek BV, 9608 TB Westerbroek (NL)
(72) Erfinder: Cleveringa, Ru, 9331 CN Norg (NL)
(74) Vertreter: Gulde & Partner

(56) Entgegenhaltungen:
- DE-U1- 9 210 418
- US-A- 2 818 891
- US-A- 2 922 446
- US-A- 5 727 765

## Beschreibung

Die Erfindung betrifft eine Handhabungsvorrichtung und ein System mit der Handhabungsvorrichtung und wenigstens einer Sicherungssäule.

### Technologischer Hintergrund

Handhabungsvorrichtungen kommen in vielen Bereichen der Industrie und des alltäglichen Lebens zum Einsatz und dienen vornehmlich dem Zweck, den Menschen dabei zu unterstützen, größere unhandliche Lasten sicher handzuhaben.

Ein großer Einsatzbereich solcher Vorrichtungen ist die Handhabung von Schläuchen zur Leitung von Betriebsstoffen, beispielsweise Benzin, Kerosin, Öl oder dergleichen. Häufig weisen derartige Schläuche Durchmesser von bis zu 10 cm oder mehr auf und sind zudem sehr massiv gestaltet. Um beispielsweise ein Fahrzeug oder Flugzeug zu betanken sind nicht selten größere Distanzen und Höhenunterschiede zwischen dem zu betankenden Objekt und dem Kraftstoffspeicher zu überbrücken, wodurch die handzuhabende Masse des beispielsweise Tankschlauchs weiter ansteigt.

Bekannte Handhabungshilfen weisen dabei regelmäßig eine serielle Kinematik, bestehend aus mehreren gelenkig miteinander verbundenen Gliedern und einer am Fußboden installierten Basis auf. Die Kinematik ist somit in einer Arbeitsebene positionierbar. Ein beispielsweise handzuhabender Schlauch kann dann von einer stationären Betriebsstoffleitung abgezweigt und an mehreren Fixierungspunkten über die gesamte Länge der Handhabungshilfe befestigt werden. Die Handhabungshilfe trägt somit die gesamte Masse der Schlauchleitung und ermöglicht es dem Anwender, diese unter Ausnutzung der Beweglichkeit der Gelenke der Handhabungshilfe in der Arbeitsebene zu positionieren. Auch Handhabungshilfen zur Führung von zwei Schlauchleitungen sind bekannt, wobei die einzelnen Schlauchleitungen in solchen Fällen geschichtet oder nebengeordnet entlang der Struktur der Handhabungshilfe an den Fixierpunkten befestigt sind oder auf dieser aufliegen. Die Enden der Schläuche hängen am Ende der Handhabungshilfe frei herab und können entsprechend dem beispielsweise zu betankenden Objekt zugeführt werden.

In der US 2922446 A ist eine Handhabungsvorrichtung für Leitungen beschrieben. Diese umfasst einen Stützturm, von dem her eine Halterungskinematik für eine Leitung auskragt. Aus der US 2818891 A geht eine weitere Handhabungsvorrichtung für Tankschläuche hervor, in der mehrere Tankschläuche jeweils von mehreren Kragarmen über an diesen beweglich gelagerten Seilzügen und diesen zugeordneten Befestigungselementen getragen werden.

Des Weiteren zeigt die US 5727765 A eine Vorrichtung zur sicheren Handhabung einer Benzinzapfpistole. Die Vorrichtung umfasst einen auf einer Zapfsäule schwenkbar gelagerten Kragarm, an dessen Unterseite zugkraftentlastete Seilzüge angeordnet sind. Die Seilzüge sind mit den Zapfpistolen verbunden.

Schließlich offenbart die DE 9210418 U1 eine Vorrichtung zum Aufbringen von Mörtel mit einem Schlauch. Die Vorrichtung umfasst eine Vielzahl von Standbeinen, die mit einem Querträger verbunden sind. An dem Querträger sind zwei schwenkbare Ausleger befestigt, mit denen ein oder mehrere Schläuche handhabbar sind.

Nachteilig an den bekannten Lösungen ist, dass mehrere Schlauchleitungen nicht über die Handhabungshilfe unabhängig voneinander positionierbar sind. Nach Ausrichtung der Handhabungshilfe müssen die unabhängigen Schlauchenden manuell vom Endpunkt der Handhabungshilfe zum Zielobjekt geführt werden. Die dabei zu überwindende Distanz in der Arbeitsebene und häufig auch Höhenunterschiede, führen zu hohen Belastungen des Bedienpersonals.

Es ist daher Aufgabe der vorliegenden Erfindung, eine Handhabungseinrichtung zu schaffen, mit der mehrere längliche biegeschlaffe Bauteile mit großen Massen unabhängig voneinander an eine Zielposition geführt werden können, ohne dass das Bedienpersonal dabei ergonomisch ungünstigen Bedingungen ausgesetzt wird.

### Zusammenfassung der Erfindung

Diese Aufgabe wird durch die Gegenstände der unabhängigen Ansprüche 1 und 9 gelöst. Die Erfindung betrifft eine Handhabungsvorrichtung für Tankschläuche, aufweisend zumindest eine Basisstruktur, ein an der Basisstruktur in wenigstens einem Freiheitsgrad beweglich gelagertes erstes Führungsglied, ein an einem vorangehenden Führungsglied in wenigstens einem Freiheitsgrad beweglich gelagertes erstes Halteglied und ein dem ersten Halteglied zugeordnetes Befestigungselement zur Aufnahme eines Tankschlauchs. Erfindungsgemäß ist vorgesehen, dass die Vorrichtung wenigstens ein weiteres Halteglied mit wenigstens einem dem weiteren Halteglied zugeordneten Befestigungselement zur Aufnahme eines weiteren Tankschlauchs aufweist, wobei die Halteglieder voneinander unabhängig in jeweils wenigstens einem Freiheitsgrad beweglich an dem vorangehenden Führungsglied gelagert sind.

Dies bietet den Vorteil, dass durch die wenigstens zwei voneinander unabhängig beweglichen Halteglieder mit den jeweils zugeordneten Befestigungselementen wenigstens zwei Tankschläuche aufgenommen und positioniert werden können, wobei diese permanent durch das jeweilige Halteglied gestützt sind.

Bevorzugt sind die Befestigungselemente ausgebildet, Tankschlauchleitungen zu führen und/oder zu befestigen. Besonders bevorzugt sind die Befestigungselemente schellenförmig ausgebildet. All dies bietet den Vorteil, dass mehrere Tankschlauchleitungen simultan und sicher handhabbar sind.

Weiterhin bevorzugt sind die Halteglieder vertikal in unterschiedlichen Ebenen gelagert und/oder weisen unterschiedliche Längen auf. Auf diese Weise lassen sich die Halteglieder über- beziehungsweise untereinander und/oder vor- beziehungsweise hintereinander her schwenken, wodurch eine nutzbare Arbeitsebene beziehungsweise ein Arbeitsraum vergrößert wird.

In bevorzugter Ausgestaltung sind die Halteglieder in jeweils einer horizontal verlaufenden und einer vertikal verlaufenden Rotationsachse beweglich an dem vorangehenden Führungsglied gelagert. Dies bietet den Vorteil, dass die Halteglieder sowohl in der Höhe, als auch in der Arbeitsebene verstellbar sind. Besonders bevorzugt weist die Vorrichtung hierzu jeweils zwei fünfwertige Gleit- und/oder Wälzlager auf. In diesem Fall existiert zwischen den jeweiligen beiden Lagern genau genommen jeweils ein weiteres Glied. Rein beispielhaft bedeutet dies für ein Halteglied, dass dieses zunächst über ein in der horizontalen Achse beweglichen Wälzlager mit dem weiteren Glied verbunden ist, welches dann in dem in der vertikalen Achse beweglichen Wälzlager mit dem vorangehenden Führungsglied verbunden ist. Dies bietet den Vorteil, dass auf standardisierte und kostengünstige Komponenten zurückgegriffen werden kann, die Fehleranfälligkeit sinkt und in Ersatzteilfällen ein einfacher Austausch erfolgen kann. Weiterhin bevorzugt ist, dass die Vorrichtung jeweils ein vierwertiges Lager, rein beispielhaft ein Kreuzgelenk, aufweist. Dies bietet den Vorteil, dass die Konstruktion kompakter wird. In diesem Fall befindet sich kein weiteres Glied zwischen dem jeweiligen Halteglied und dem vorangehenden Führungsglied. Wird im Zusammenhang mit der Patentanmeldung (wie oben stehend) von einer in einer oder mehreren Achsen beweglichen Lagerung der Halteglieder an dem vorangehenden Führungsglied gesprochen, so sind auf dieser Abstraktionsebene alle Ausführungsformen, das heißt solche mit und ohne zusätzliche Glieder gemeint.

Weiterhin bevorzugt sind jedem Führungsglied ein oder mehrere weitere Befestigungselemente zugeordnet, deren Anzahl wenigstens der Anzahl an Haltegliedern entsprechen. Dies bietet den Vorteil, dass die handzuhabenden Tankschläuche an mehreren Stützpunkten befestigt oder gestützt sein können. Die Handhabung wird dadurch signifikant vereinfacht und sicherer. Rein beispielhaft sind bei insgesamt zwei Haltegliedern und insgesamt drei Führungsgliedern für jedes Führungsglied zwei Befestigungselemente vorgesehen. Insgesamt verteilen sich also sechs Befestigungselemente über die Führungsglieder und acht Befestigungselemente über die gesamte Vorrichtung.

In bevorzugter Ausgestaltung weist die Vorrichtung justierbare Mittel für eine Zugentlastung und/oder zur Erzeugung einer definierten Dissipation von Vorrichtungs- und/oder Prozessenergie auf. Dies bietet den Vorteil, dass Gewichtskräfte handzuhabender Objekte, Reaktionskräfte durch rein beispielhaft in einer handzuhabenden Schlauchleitung geleitetes Fluid sowie ein dynamisches Verhalten der verwendeten Mittel zur beispielsweise Zugentlastung selbst, kompensiert beziehungsweise beeinflusst werden können. Als Vorrichtungsenergie wird im Sinne der Patentanmeldung jene Form von Energie bezeichnet, die innerhalb der Vorrichtung gespeichert oder umgewandelt wird. Als Prozessenergie im Sinne der Patentanmeldung wird jene Form von Energie bezeichnet, die von anderen Systemen in Folge einer Benutzung im Handhabungsprozess auf die Vorrichtung übertragen wird und so zu Vorrichtungsenergie wird. Veranschaulichende Beispiele werden im Folgenden näher erörtert.

Besonders bevorzugt weist die Vorrichtung als Mittel für die Zugentlastung und/oder für die Erzeugung einer definierten Dissipation von Vorrichtungs- und/oder Prozessenergie wenigstens eine Anzahl gedämpfter Gasdruckfedern und Justageschrauben auf, wobei die Anzahl einer Menge an vorhandenen Haltegliedern entspricht und wobei die Gasdruckfedern in einem ersten Lagerpunkt mit jeweils einem Halteglied wirkverbunden sind und in einem zweiten Lagerpunkt mit jeweils einer Justageschraube wirkverbunden sind und wobei eine jeweilige Federvorspannung über die jeweilige Justageschraube einstellbar ist. Dies bietet diverse Vorteile. So kann die Gewichtskraft der handzuhabenden Objekte durch die von der Gasdruckfeder erzeugte Gegenkraft ausgeglichen oder überkompensiert (Zugentlastung) werden was ergonomische und sicherheitstechnische Vorteile bietet. Weiterhin begrenzt die Dämpfung der Gasdruckfeder vorteilhaft eine Beschleunigung derselben durch Dissipation von in der Feder gespeicherter Vorrichtungsenergie. Diese wird dadurch besonders einfach manuell kontrollierbar. Dasselbe gilt für den Fall, dass die Gasdruckfeder auf Grund der Masse des beispielsweise handzuhabenden Schlauchs zusammengedrückt wird. In diesem Fall führt der Schlauch der Vorrichtung beziehungsweise der Gasdruckfeder Prozessenergie zu, die über die Dämpfung dissipiert, wodurch eine zu schnelle Abwärtsbewegung des Halteglieds vorteilhaft vermieden wird. Durch die Justageschraube kann die Vorspannung der Gasdruckfeder vorteilhaft eingestellt werden (Justage). Hierdurch wird der Feder beispielsweise Vorrichtungsenergie zugeführt. Insbesondere kann so vorteilhaft ein verfügbarer Federweg und dadurch ein verfügbarer Weg für eine Bewegung des jeweiligen Halteglieds eingestellt werden. Auch die Federvorspannung kann vorteilhaft verändert werden. Neben Gasdruckfedern können auch andere dem Fachmann bekannte Federn wie rein beispielhaft Tellerfedern oder Wendelfedern eingesetzt werden. Auch alternative bekannte Formen der Energiespeicherung und Dämpfung sind technisch möglich, rein beispielhaft seien hydraulische Systeme mit Drosselventilen genannt.

Weiterhin bevorzugt ist, dass wenigstens die Basisstruktur und/oder ein Führungsglied und/oder ein Halteglied in wenigstens einem weiteren Freiheitsgrad beweglich sind. Beispielsweise kann die Basisstruktur zusätzlich vertikal verstellbar sein, wodurch ein Arbeitshöhenbereich der Vorrichtung vorteilhaft flexibler wird. Ebenso kann beispielsweise ein Führungsglied eine Längsverstellung aufweisen, wodurch die Arbeitsebene der Vorrichtung vorteilhaft flexibilisiert wird. Ferner kann rein beispielhaft ein Halteglied einen zusätzlichen Freiheitsgrad um eine Achse aufweisen, die sich kollinear zu dem Halteglied erstreckt. Auch eine Kombination aus diesen und weiteren Varianten ist möglich und bietet so den Vorteil, dass die Flexibilität der Handhabungsvorrichtung an die jeweiligen Anforderungen anpassbar ist.

Ferner ist ein System Gegenstand der vorliegenden Erfindung. Das erfindungsgemäße System besteht aus zumindest einer erfindungsgemäßen Handhabungsvorrichtung und einer Sicherungssäule. Die Sicherungssäule ist ausgebildet, die Handhabungsvorrichtung in einer Parkposition zu sichern. Dies bietet den Vorteil, dass die bewegliche Handhabungsvorrichtung im Falle einer Nicht-Benutzung sicher fixiert werden kann.

Weiterhin bevorzugt ist, dass die Sicherungssäule über bewegliche Formelemente verfügt, die ausgebildet sind, an entsprechenden Aufnahmeabschnitten der Handhabungsvorrichtung zu greifen und diese kraft- und/oder formschlüssig zu sichern. Auf diese Weise kann besonders flexibel zwischen der Parkposition und einem Benutzungszustand gewechselt werden.

Weitere bevorzugte Ausgestaltungen der vorliegenden Erfindung ergeben sich auch aus den Unteransprüchen und der nachfolgenden Beschreibung.

### Kurzbeschreibung der Figuren

Die Erfindung wird nachfolgend anhand eines Ausführungsbeispiels und dazugehöriger Zeichnungen näher erläutert. Die Figuren zeigen:
- Figur 1: Ein bevorzugtes Ausführungsbeispiel einer erfindungsgemäßen Vorrichtung in prinziphafter Darstellung und
- Figur 2: ein bevorzugtes Ausführungsbeispiel zweier erfindungsgemäßer Systeme in prinziphafter Darstellung.

### Detaillierte Beschreibung der Erfindung

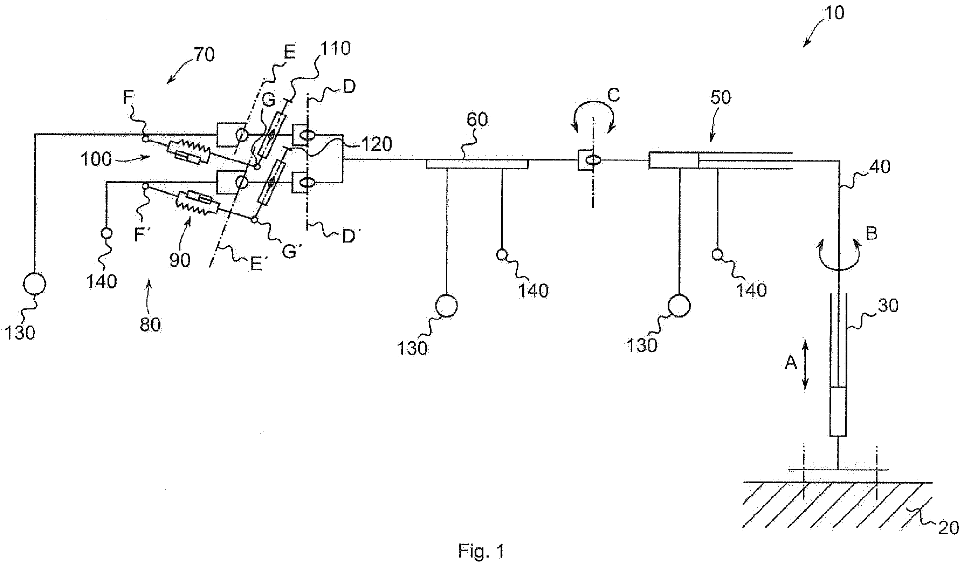

Figur 1 zeigt ein bevorzugtes Ausführungsbeispiel einer erfindungsgemäßen Vorrichtung in prinziphafter Darstellung. Die Handhabungsvorrichtung 10 weist eine mit einem Umweltsystem 20 fest verbundene Basisstruktur 30 auf. Ein erstes Führungsglied 40 ist an der Basisstruktur 30 in einem rotatorischen Freiheitsgrad A und einem vertikalen Freiheitsgrad B beweglich gelagert. Ferner ist das erste Führungsglied 40 in sich durch eine zusätzliche Linearachse 50 lateral verstellbar. An dem ersten Führungsglied 40 ist ein zweites Führungsglied 60 in einem rotatorischen Freiheitsgrad C beweglich gelagert. An dem zweiten Führungsglied 60 sind ein erstes Halteglied 70 und ein zweites Halteglied 80 jeweils um eine vertikale Achse D, D' rotatorisch beweglich und jeweils um eine horizontale Achse E, E' rotatorisch beweglich gelagert. Ein genau genommen zwischen den Achsen E und D sowie E' und D' vorhandenes weiteres Glied wird systematisch der jeweiligen Lagerung um zwei rotatorische Achsen E, D beziehungsweise E', D' des jeweiligen Haltegliedes 70, 80 zugeordnet. Die Handhabungsvorrichtung 10 verfügt weiterhin über jeweils eine einem Halteglied 70, 80 zugeordnete gedämpfte Gasdruckfeder 90, 100. Diese sind in jeweils einem ersten Lagerpunkt F beziehungsweise F' mit dem zugehörigen Halteglied 70 beziehungsweise 80 verbunden und in jeweils einem zweiten Lagerpunkt G, G' mit jeweils einer zugehörigen Justageschraube 110, 120 verbunden. Zur Aufnahme von Tankschlauchleitungen sind entsprechende Befestigungselemente vorgesehen. In diesem Ausführungsbeispiel weist die Handhabungsvorrichtung 10 an jedem Führungsglied 40, 60 jeweils ein Befestigungselement für einen größeren Tankschlauchdurchmesser 130 und ein Befestigungselement für einen kleineren Tankschlauchdurchmesser 140 auf. An den Haltegliedern 70, 80 ist jeweils ein Befestigungselement für einen größeren Tankschlauchdurchmesser 130 oder ein Befestigungselement für einen kleineren Tankschlauchdurchmesser 140 vorgesehen. Somit sind mit der Handhabungsvorrichtung 10 simultan ein größerer und ein kleinerer Tankschlauch unabhängig voneinander handhabbar.

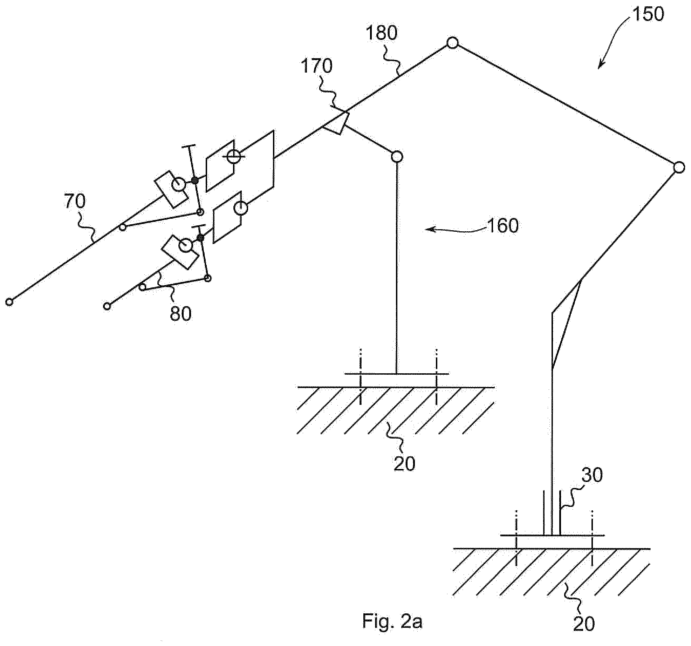

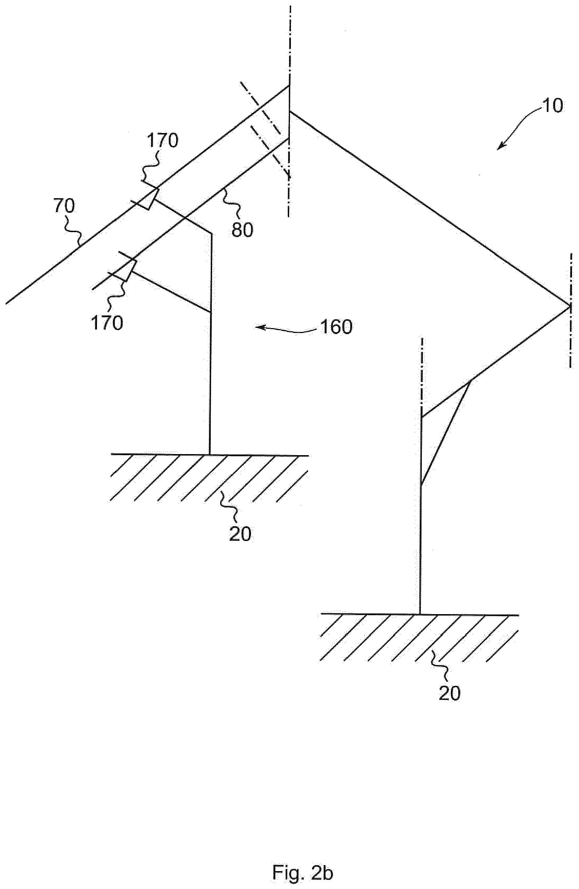

Figur 2 zeigt ein bevorzugtes Ausführungsbeispiel zweier erfindungsgemäßer Systeme in prinziphafter Darstellung, aufweisend jeweils eine erfindungsgemäße Handhabungsvorrichtung und eine Sicherungssäule. Gleichbezeichnete Merkmale wie in Figur 1 entsprechen diesen Merkmalen, so dass deren Beschreibung auch für Figur 2 gilt. Bei Abweichungen werden diese explizit beschrieben. Die Darstellung in Figur 2 ist gegenüber der Figur 1 vereinfacht dargestellt. In Figur 2a ist ein erfindungsgemäßes System mit einer erfindungsgemäßen Handhabungsvorrichtung mit drei Führungsgliedern 150 gezeigt. Die Handhabungsvorrichtung 150 befindet sich hier in einer Parkposition. Die Sicherungssäule 160 fixiert die Handhabungsvorrichtung 150 über eine Zange 170, die an dem dritten Führungsglied 180 an einem entsprechenden Aufnahmeabschnitt angreift. In Figur 2b ist ein erfindungsgemäßes System mit weiterhin stark vereinfacht dargestellter erfindungsgemäßer Handhabungsvorrichtung 10 gezeigt. Die Sicherungssäule 160 verfügt hier über zwei Zangen 170, die jeweils an einem Halteglied 70, 80 angreifen und die Handhabungsvorrichtung 10 in der Parkposition sichern.

### Bezugszeichen

- 10: Handhabungsvorrichtung
- 20: Umweltsystem
- 30: Basisstruktur
- 40: erstes Führungsglied
- 50: Linearachse
- 60: zweites Führungsglied
- 70: erstes Halteglied
- 80: zweites Halteglied
- 90: gedämpfte Gasdruckfeder
- 100: gedämpfte Gasdruckfeder
- 110: Justageschraube
- 120: Justageschraube
- 130: Befestigungselement für größeren Tankschlauchdurchmesser
- 140: Befestigungselement für kleineren Tankschlauchdurchmesser
- 150: Handhabungsvorrichtung mit drei Führungsgliedern
- 160: Sicherungssäule
- 170: Zange
- 180: drittes Führungsglied
- A: rotatorischer Freiheitsgrad
- B: vertikaler Freiheitsgrad
- C: rotatorischer Freiheitsgrad
- D: vertikale Achse
- D': vertikale Achse
- E: horizontale Achse
- E': horizontale Achse
- F: erster Lagerpunkt
- F': erster Lagerpunkt
- G: zweiter Lagerpunkt
- G': zweiter Lagerpunkt

## Patentansprüche

1. Handhabungsvorrichtung (10, 150) für Tankschläuche, aufweisend zumindest
- eine Basisstruktur (30),
- ein an der Basisstruktur (30) in wenigstens einem Freiheitsgrad beweglich gelagertes erstes Führungsglied (40),
- ein an einem vorangehenden weiteren Führungsglied (60) in wenigstens einem Freiheitsgrad beweglich gelagertes erstes Halteglied (70),
- ein dem ersten Halteglied (70) zugeordnetes Befestigungselement (130, 140) zur Aufnahme eines Tankschlauchs,
wobei die Vorrichtung wenigstens ein weiteres Halteglied (80) mit wenigstens einem dem weiteren Halteglied zugeordneten Befestigungselement (130, 140) zur Aufnahme eines weiteren Tankschlauchs aufweist, wobei die Halteglieder (70, 80) voneinander unabhängig in jeweils wenigstens einem Freiheitsgrad beweglich an dem vorangehenden Führungsglied (60) gelagert sind.

2. Handhabungsvorrichtung nach Anspruch 1, **dadurch gekennzeichnet, dass** das die Befestigungselemente (130, 140) ausgebildet sind, Tankschlauchleitungen zu führen und/oder zu befestigen.

3. Handhabungsvorrichtung nach Anspruch 1 oder 2, **dadurch gekennzeichnet, dass** die Halteglieder (70, 80) vertikal in unterschiedlichen Ebenen gelagert sind und / oder unterschiedliche Längen aufweisen.

4. Handhabungsvorrichtung nach einem der Ansprüche 1 bis 3, **dadurch gekennzeichnet, dass** die Halteglieder (70, 80) in jeweils einer horizontal verlaufenden (E, E') und einer vertikal verlaufenden (D, D') Rotationsachse beweglich an dem vorangehenden Führungsglied (60) gelagert sind.

5. Handhabungsvorrichtung nach einem der Ansprüche 1 bis 4, **dadurch gekennzeichnet, dass** jedem Führungsglied (40, 60, 180) ein oder mehrere weitere Befestigungselemente (130, 140) zugeordnet sind, deren Anzahl wenigstens der Anzahl an Haltegliedern (70, 80) entsprechen.

6. Handhabungsvorrichtung nach einem der Ansprüche 1 bis 5, **dadurch gekennzeichnet, dass** diese justierbare Mittel (90, 100, 110, 120) für eine Zugentlastung und/oder zur Erzeugung einer definierten Dissipation von Vorrichtungs- und/oder Prozessenergie aufweist.

7. Handhabungsvorrichtung nach einem der Anspruch 6, **dadurch gekennzeichnet, dass** die Mittel wenigstens eine Anzahl gedämpfter Gasdruckfedern (90, 100) und Justageschrauben (110, 120) aufweisen, wobei die Anzahl einer Menge an vorhandenen Haltegliedern (70, 80) entspricht und wobei die Gasdruckfedern (90, 100) in einem ersten Lagerpunkt (F, F') mit jeweils einem Halteglied (70, 80) wirkverbunden sind und in einem zweiten Lagerpunkt (G, G') mit jeweils einer Justageschraube (110, 120) wirkverbunden sind und wobei eine jeweilige Federvorspannung über die jeweilige Justageschraube (110, 120) einstellbar ist.

8. Handhabungsvorrichtung nach einem der Ansprüche 1 bis 7, **dadurch gekennzeichnet, dass** wenigstens die Basisstruktur (30) und/oder ein Führungsglied (40, 60, 180) und/oder ein Halteglied (70, 80) in wenigstens einem weiteren Freiheitsgrad beweglich sind.

9. System, aufweisend zumindest eine Handhabungsvorrichtung (10, 150) nach einem der Ansprüche 1 bis 8 und eine Sicherungssäule (160).

10. System nach Anspruch 9, **dadurch gekennzeichnet, dass** die Sicherungssäule (160) über bewegliche Formelemente verfügt, die ausgebildet sind, an entsprechenden Aufnahmeabschnitten der Handhabungsvorrichtung (10, 150) zu greifen und diese kraft- und/oder formschlüssig zu sichern.

## Claims

1. A handling device (10, 150) for fuel hoses, comprising at least
- a base structure (30),
- a first guide element (40), which is mounted on the base structure (30) so as to be movable in at least one degree of freedom,
- a first holding element (70), which is mounted on a preceding, additional guide element (60) so as to be movable in at least one degree of freedom, and
- a fastening element (130, 140), which is assigned to the first holding element (70) and serves for receiving the fuel hose,
wherein the device comprises at least one additional holding element (80) with at least one fastening element (130, 140), which is assigned to the additional holding element and serves for receiving an additional fuel hose, and wherein the holding elements (70, 80) are mounted on the preceding guide element (60) independently of one another so as to be respectively movable in at least one degree of freedom.

2. The handling device according to claim 1, **characterized in that** the fastening elements (130, 140) are designed for guiding and/or fastening fuel hose lines.

3. The handling device according to claim 1 or 2, **characterized in that** the holding elements (70, 80) are vertically mounted in different planes and/or have different lengths.

4. The handling device according to one of claims 1 to 3, **characterized in that** the holding elements (70, 80) are mounted on the preceding guide element (60) so as to be respectively movable in a horizontally extending (E, E') and a vertically extending (D, D') rotational axis.

5. The handling device according to one of claims 1 to 4, **characterized in that** one or more additional fastening elements (130, 140) are assigned to each guide element (40, 60, 180), wherein the number of said additional fastening elements at least corresponds to the number of holding elements (70, 80).

6. The handling device according to one of claims 1 to 5, **characterized in that** it comprises adjustable means (90, 100, 110, 120) for strain relief and/or for generating a defined dissipation of device and/or process energy.

7. The handling device according to claim 6, **characterized in that** the means comprise at least a number of dampened gas pressure springs (90, 100) and adjusting screws (110, 120), wherein the number corresponds to a quantity of existing holding elements (70, 80), wherein the gas pressure springs (90, 100) respectively are functionally connected to a holding element (70, 80) in a first bearing point (F, F') and functionally connected to an adjusting screw (110, 120) in a second bearing point (G, G'), and wherein a respective spring preload can be adjusted by means of the respective adjusting screw (110, 120).

8. The handling device according to one of claims 1 to 7, **characterized in that** at least the base structure (30) and/or one guide element (40, 60, 180) and/or one holding element (70, 80) is movable in at least one additional degree of freedom.

9. A system comprising at least one handling device (10, 150) according to one of claims 1 to 8 and a securing column (160).

10. The system according to claim 9, **characterized in that** the securing column (160) is equipped with movable shaped elements, which are designed for gripping the handling device (10, 150) on corresponding receiving sections and for non-positively and/or positively securing this handling device.

## Revendications

1. Dispositif de manipulation (10, 150) de flexibles de pompes à carburant, comportant au moins
- une structure de base (30),
- un premier organe de guidage (40), logé en étant mobile avec au moins un degré de liberté sur la structure de base (30),
- un premier organe de maintien (70), logé de manière mobile avec au moins un degré de liberté sur un organe de guidage (60) supplémentaire précédent,
- un élément de fixation (130, 140), associé au premier organe de maintien (70), destiné à recevoir un flexible de pompe à carburant,
le dispositif comportant au moins un organe de maintien (80) supplémentaire, pourvu d'au moins un élément de fixation (130, 140) associé à l'organe de maintien supplémentaire, destiné à recevoir un flexible de pompe à carburant supplémentaire, les organes de maintien (70, 80) étant logés indépendamment l'un de l'autre en étant mobiles avec respectivement au moins un degré de liberté sur l'organe de guidage (60) précédent.

2. Dispositif de manipulation selon la revendication 1, **caractérisé en ce que** les éléments de fixation (130, 140) sont conçus pour guider et/ou pour fixer des conduits de flexibles de pompes à carburant.

3. Dispositif de manipulation selon la revendication 1 ou 2, **caractérisé en ce que** les organes de maintien (70, 80) sont logés à la verticale dans différents plans et/ou présentent différentes longueurs.

4. Dispositif de manipulation selon l'une quelconque des revendications 1 à 3, **caractérisé en ce que** les organes de maintien (70, 80) sont logés en étant mobiles dans respectivement un axe de rotation s'écoulant à l'horizontale (E, E') et dans un autre s'écoulant à la verticale (D, D') sur l'organe de guidage (60) précédent.

5. Dispositif de manipulation selon l'une quelconque des revendications 1 à 4, **caractérisé en ce qu'**à chaque organe de guidage (40, 60, 180) sont associés un ou plusieurs éléments de fixation (130, 140) supplémentaires, dont le nombre correspond au moins au nombre des organes de maintien (70, 80).

6. Dispositif de manipulation selon l'une quelconque des revendications 1 à 5, **caractérisé en ce qu'**il comporte des moyens ajustables (90, 100, 110, 120) pour une décharge de traction et/ou pour générer une dissipation définie de l'énergie du dispositif et/ou du processus.

7. Dispositif de manipulation selon la revendication 6, **caractérisé en ce que** les moyens comportent au moins un nombre de ressorts à gaz (90, 100) amortis et de vis d'ajustage (110, 120), le nombre correspondant à une quantité d'organes de maintien (70, 80) présents, et les ressorts à gaz (90, 100) étant en liaison active sur un point d'appui (F, F') avec respectivement un organe de maintien (70, 80) et sur un deuxième point d'appui (G, G') avec respectivement une vis d'ajustage (110, 120) et une précontrainte de ressort respective étant réglable par l'intermédiaire de la vis d'ajustage (110, 120) respective.

8. Dispositif de manipulation selon l'une quelconque des revendications 1 à 7, **caractérisé en ce qu'**au moins la structure de base (30) et/ou un organe de guidage (40, 60, 180) et/ou un organe de maintien (70, 80) sont mobiles avec au moins un degré de liberté supplémentaire.

9. Système, comportant au moins un dispositif de manipulation (10, 150) selon l'une quelconque des revendications 1 à 8 et une colonne de blocage (160).

10. Système selon la revendication 9, **caractérisé en ce que** la colonne de blocage (160) dispose d'éléments de moulage mobiles, qui sont conçus pour s'engager sur des sections de logement correspondantes du dispositif de manipulation (10, 150) et pour les bloquer par complémentarité de force et/ou de forme.
